# EUROPÄISCHE PATENTSCHRIFT

(11) **EP 2 691 824 B1**
(45) Veröffentlichungstag und Bekanntmachung des Hinweises auf die Patenterteilung: **08.07.2015**
(21) Anmeldenummer: 12710243.2
(22) Anmeldetag: 20.03.2012
(51) Int. Cl.: G05B 19/408, B23K 26/08, B23K 26/04

(54) **VERFAHREN ZUM BEARBEITEN VON WERKSTÜCKEN MITTELS EINER NUMERISCH GESTEUERTEN WERKSTÜCKBEARBEITUNGSVORRICHTUNG SOWIE WERKSTÜCKBEARBEITUNGSVORRICHTUNG**
METHOD FOR MACHINING WORKPIECES BY MEANS OF A NUMERICALLY CONTROLLED WORKPIECE MACHINING DEVICE AND WORKPIECE MACHINING DEVICE
PROCÉDÉ D'USINAGE DE PIÈCES À L'AIDE D'UN DISPOSITIF D'USINAGE DE PIÈCE À COMMANDE NUMÉRIQUE ET DISPOSITIF D'USINAGE DE PIÈCE À COMMANDE NUMÉRIQUE

(30) Priorität: 30.03.2011 DE 102011006447
(43) Veröffentlichungstag der Anmeldung: 05.02.2014
(73) Patentinhaber: Trumpf Laser- und Systemtechnik GmbH, 71254 Ditzingen (DE)
(72) Erfinder: WADEHN, Wolf, 71735 Nussdorf (DE)
(74) Vertreter: Kohler Schmid Möbus Patentanwälte
(86) Internationale Anmeldenummer: PCT/EP2012/054893
(87) Internationale Veröffentlichungsnummer: WO 2012/130665

(56) Entgegenhaltungen:
- EP-A1- 0 348 531
- US-A- 4 659 900

## Beschreibung

Die Erfindung betrifft ein Verfahren zum Bearbeiten von baugleichen Werkstücken mittels einer numerisch gesteuerten (NC-) Werkstückbearbeitungsvorrichtung sowie eine Werkstückbearbeitungsvorrichtung für ein solches Verfahren.

Bei derartigen Werkstückbearbeitungsvorrichtungen wird die Positionierung und Bewegung eines bei der Bearbeitung der Werkstücke eingesetzten Werkzeugs relativ zu einem Werkstück mittels einer numerischen Steuereinrichtung kontrolliert. Das Werkzeug wird beim Bearbeiten der Werkstücke entlang einer Werkzeugbahn relativ zum Werkzeug bewegt, die üblicher Weise auf Grundlage von CAD-Daten zu einer Soll-Geometrie der Werkstücke festgelegt ist (CAD/CAM). Die Werkzeugbahn wird durch bahnbeschreibende NC-Daten codiert, die in der Steuereinrichtung hinterlegt sind und die bei der Bearbeitung der Werkstücke mittels eines NC-Programms abgearbeitet werden.

Die Werkstücke weisen in der Praxis jedoch häufig Geometrieabweichungen von der CAD-Soll-Geometrie auf. So können insbesondere Werkstücke, die im Wege eines Umformprozesses gewonnen wurden, wie etwa Tiefziehteile, mitunter auch größere Ungenauigkeiten aufweisen, durch die die Bearbeitung der Werkstücke entlang einer steuerungsseitig fix vorgegebenen Soll-Werkzeugbahn erschwert wird.

So muss im beispielhaften Fall einer Werkstückbearbeitung mittels einer Laserbearbeitungsvorrichtung ein Laserbearbeitungskopf aus prozesstechnischen Gründen einen stets sehr konstanten Arbeitsabstand von beispielsweise 1 mm von dem Werkstück aufweisen. Da die Werkstückungenauigkeiten jedoch häufig um ein Vielfaches größer sind, ist in den Laserbearbeitungskopf üblicher Weise eine Abstandsmesseinrichtung zum Messen des jeweiligen Arbeitsabstands des Laserbearbeitungskopfs von dem zu bearbeitenden Werkstück integriert. Der Arbeitsabstand wird dann steuerungsseitig auf Grundlage der ermittelten Abstandswerte auf einen vorgegebenen Sollabstand geregelt. Dieser Regelkreis ist der Bewegungssteuerung des Laserbearbeitungskopfs entlang der von der NC-Steuereinrichtung vorgegebenen Soll-Werkzeugbahn überlagert und wird als Abstandsregelung bezeichnet.

Der Istwert einer Regelung weist in der Praxis im Allg. einer der auszuregelnden Stellgröße entsprechende Abweichung auf. Die Regelparameter sind im Allgemeinen relativ niedrig, so dass sich größere Werkstückungenauigkeiten negativ auf den Bearbeitungsprozess auswirken können. Übersteigen die Werkstückungenauigkeiten ein bestimmtes Maß, so kann die Abstandsregelung die Differenz nicht hinreichend nachregeln, was zu Kollisionen des Werkzeugs mit dem bearbeiteten Werkstück bzw. einem Prozessabriss führen kann. In diesem Fall muss die steuerungsseitig vorgegebene Soll-Werkzeugbahn, d.h. das NC-Programm, in der Regel manuell nachkorrigiert werden. Dieser Prozess liegt in der Maschinenhauptzeit und ist somit kostenintensiv.

Aus der EP 0 348 531 A1 ist ein Verfahren zum Bearbeiten von Werkstücken mittels einer numerisch gesteuerten Laserbearbeitungsvorrichtung bekannt geworden, umfassend die folgenden Schritte:
- Bearbeiten eines Werkstücks unter Vorgabe einer Soll-Werkzeugbahn für ein Laserwerkzeug der Laserbearbeitungsvorrichtung, und
- Regeln eines Arbeitsabstands des Laserwerkzeugs vom Werkstück auf einen konstanten Sollabstand, so dass das Laserwerkzeug beim Bearbeiten des Werkstücks entlang der Soll-Werkzeugbahn auf einer abstandsgeregelten Ist-Werkzeugbahn bewegt wird.

Aus der WO 2007/045 223 A1 ist weiterhin ein Verfahren bekannt geworden, bei dem ein in der Steuereinrichtung hinterlegter bahncodierender NC-Datensatz, d.h. die durch diesen definierte Soll-Werkzeugbahn des Werkzeugs, vor dem Bearbeiten eines oder auch mehrerer weiterer Werkstücke anhand des jeweils zuvor bearbeiteten Werkstücks optimiert wird. Für diese Korrektur der Soll-Werkzeugbahn wird das jeweils zuvor bearbeitete Werkstück in einem zweiten Schritt vermessen und die Soll-Werkzeugbahn mittels der gewonnenen Messwerte für die Bearbeitung des weiteren Werkstücks optimiert. Die Bearbeitung des jeweils nächsten Werkstücks erfolgt somit auf Grundlage der in dieser Weise optimierten Soll-Werkzeugbahn. Eine Bewertung der Werkstückgüte des jeweils zuvor (zuletzt) bearbeiteten Werkstücks kann nur im Rahmen des Vermessens des Werkstücks erfolgen. Insbesondere durch die zwei sequentiellen Schritte (Bearbeiten und Messen) ist dieses Verfahren insgesamt sehr zeitaufwändig und daher unter Kostengesichtspunkten wenig vorteilhaft.

Aufgabe der Erfindung ist es, ein Verfahren zum Bearbeiten von baugleichen Werkstücken mittels einer numerisch gesteuerten Werkstückbearbeitungsvorrichtung anzugeben, durch das eine für die Bearbeitung eines Werkstücks vorgegebene Soll-Werkzeugbahn auf einfachere und effizientere Weise für die Bearbeitung eines weiteren Werkstücks optimiert werden kann und/oder das eine einfachere Bewertung der Werkstückgüte des bearbeiteten Werkstücks erlaubt. Das Verfahren soll dabei insbesondere auch bei existierenden Werkstückbearbeitungsvorrichtungen, wie etwa Laserbearbeitungsvorrichtungen, wie z.B. Laserflachbettmaschinen, Stanz-/Laserkombinationsmaschinen oder Robotern, nachträglich implementiert werden können. Es ist weiterhin Aufgabe der Erfindung, eine Werkzeugbearbeitungseinrichtung für die Durchführung des erfindungsgemäßen Verfahrens anzugeben.

Die das Verfahren betreffende Aufgabe wird durch ein Verfahren mit den in Patentanspruch 1 angegebenen Merkmalen und die die Werkstückbearbeitungsvorrichtung betreffende Aufgabe durch eine Werkstückbearbeitungsvorrichtung mit den im Patentanspruch 12 angegebenen Merkmalen gelöst.

Das erfindungsgemäße Verfahren ermöglicht eine insgesamt einfachere und effizientere Optimierung einer vorgegebenen Soll-Werkzeugbahn für die Bearbeitung eines oder auch mehrerer weiterer Werkstücke. Überdies wird auch die Bewertung der Werkstückgüte des zuletzt bearbeiteten Werkstücks vereinfacht. Die Bearbeitung der Werkstücke erfolgt aufgrund der aktiven Abstandsregelung des Arbeitsabstands des Werkzeugs zum jeweiligen Werkstück entlang der steuerungsseitig vorgegebenen Soll-Werkzeugbahn auf einer für die Bearbeitung des jeweiligen Werkstücks bereits optimierten, weil abstandsgeregelten, Ist-Werkzeugbahn. Die Soll-Werkzeugbahn eines weiteren Werkstücks kann anhand der abstandsgeregelten Ist-Werkzeugbahn, auf der das Werkzeug beim Bearbeiten eines zuvor, insbesondere des zuletzt, bearbeiteten Werkstücks bewegt wurde, optimiert werden. Somit wird die tatsächliche Geometrie des zuvor bearbeiteten Werkstücks in der optimierten Soll-Werkzeugbahn abgebildet bzw. berücksichtigt. Bei der vorgegebenen Soll-Werkzeugbahn kann es sich dabei sowohl um eine eingangs erläuterte "native" Soll-Werkzeugbahn handeln, die durch einen in der Steuereinrichtung programmierten NC-Datensatz codiert ist. Dieser NC-Datensatz kann beispielsweise aus CAD-Daten zu einer Sollgeometrie der Werkstücke generiert sein. Alternativ kann es sich auch um eine während des Bearbeitungsprozesses bereits ein- oder mehrmals optimierte Soll-Werkzeugbahn handeln. Diese ist dann entsprechend durch einen bereits modifizierten bahncodierenden NC-Datensatz in der Steuereinrichtung codiert. Da Werkstücke in der Praxis häufig pro Charge sehr ähnliche Abweichungen, d.h. systematische Geometriefehler aufweisen, die beispielsweise durch einen Werkzeugverschleiß eines Tiefziehgesenks bedingt sein können, kann die nachfolgende Bearbeitung des weiteren Werkstücks bzw. auch von jeweils weiteren Werkstücken in den meisten Fällen unter Vorgabe der (einmal) optimierten Soll-Werkzeugbahn, d.h. mit dem für die baugleichen Werkstücke optimierten NC-Programm, erfolgen. Dadurch werden deutlich geringere Ausregelvorgänge der Abstandsregelung ermöglicht. Zudem können dadurch ein besseres Bearbeitungsergebnis und ein insgesamt gegenüber Störungen weniger anfälliger Bearbeitungsprozess der Werkstücke realisiert werden. Darüber hinaus kann eine beim Bearbeiten der Werkstücke erforderliche Dynamik der überlagerten Abstandsregelung verringert werden, so dass gegebenenfalls auf Zusatzeinrichtungen wie etwa hochdynamische Zusatzachsen des Werkzeugs für die Abstandsregelung verzichtet werden kann. Dies ist unter konstruktiven Aspekten wie auch im Hinblick auf einen gegenüber Störungen wenig anfälligen Betrieb der Bearbeitungseinrichtung von Vorteil. Weiterhin muss das Werkstück nicht aus der Bearbeitungseinrichtung entnommen und dann nachfolgend vermessen werden, was einen insgesamt vereinfachten und weniger (zeit)aufwändigen Bearbeitungsprozess ermöglicht. Durch die Bewertung der Werkstückgüte anhand der abstandsgeregelten Ist-Werkzeugbahn können beispielsweise Werkstücke mit einer fehlerhaften Geometrie, die außerhalb einer bestimmten Fehlertoleranz liegt, frühzeitig, d.h. bereits während dessen Bearbeitung, erkannt und ggf. ausgesondert werden. Eine zeitraubende separate Qualitätskontrolle oder auch weitere unnötige Bearbeitungs- bzw. Fertigungsschritte können dadurch bei entsprechendem Kostenvorteil vermieden werden.

Die Werkstückbearbeitung kann dadurch nochmals weiter verbessert werden, dass die Soll-Werkzeugbahn für das Bearbeiten eines jeweils weiteren Werkstücks jeweils in der gleichen Weise anhand des jeweils zuvor bearbeiteten Werkstücks optimiert wird. Die weiteren Werkstücke werden somit jeweils unter Vorgabe einer am jeweils zuvor bearbeiteten Werkstück optimierten Soll-Werkzeugbahn bearbeitet. Auf diese Weise können sich mit der Zeit verändernde, d.h. dynamische, Geometriefehler der Werkstücke, wie diese beispielsweise durch den fortschreitenden Verschleiß eines der Bearbeitung der Werkstücke vorgeschalteten Umformwerkzeugs verursacht werden können, bei der Bearbeitung der Werkstücke einfach und präzise kompensiert werden.

Bei der Bearbeitung des jeweiligen Werkstücks werden vorzugsweise (absolute) Achspositionen des Werkzeugs entlang bzw. um dessen Bewegungsachsen auf der jeweiligen Ist-Werkzeugbahn erfasst und die jeweilige Ist-Werkzeugbahn anhand der jeweiligen Achspositionen des Werkzeugs bestimmt. Die Achspositionen sind bei einer NC-gesteuerten Werkstückbearbeitungsvorrichtung Regelparameter und liegen steuerungsseitig ohnehin vor bzw. sind über vorhandene Sensoren der Werkstückbearbeitungseinrichtung einfach zu erfassen.

Im einfachsten Fall wird die jeweilige Soll-Werkzeugbahn derart optimiert, dass diese der Ist-Werkzeugbahn des Werkzeugs bei der Bearbeitung des jeweils zuvor bearbeiteten Werkstücks entspricht. Dadurch kann ein erforderlicher Rechenaufwand gering gehalten werden, was insbesondere bei hohen oder höchsten Bearbeitungstakten günstig ist. Diesbezüglich können beispielsweise bei der Bearbeitung eines jeweiligen Werkstücks auf der Ist-Werkzeugbahn des Werkzeugs erfasste Achspositionen des Werkzeugs entlang/um dessen Bewegungsachsen zumindest teilweise als Achspositionen des Werkzeugs auf der optimierten Soll-Werkzeugbahn verwendet werden.

In dem Falle, dass die erfassten Achspositionen zu einer ungünstigen Konstellation von Stützpunktfolgen der Soll-Werkzeugbahn führen sollten, kann die Soll-Werkzeugbahn, beispielsweise mittels eines Optimierungs-Algorithmus der NC-Steuereinrichtung, derart modifiziert werden, dass das Werkzeug bei der Werkstückbearbeitung entlang der Soll-Werkzeugbahn mit einem optimierten, d.h. größtmöglichen, Geschwindigkeitsprofil bewegt wird. Dazu können beispielsweise einzelne Achspositionen des Werkzeugbearbeitungskopfes als Bahnstützpunkte ausgedünnt, modifiziert und/oder zumindest teilweise verschliffen werden. Insgesamt kann dadurch die für eine Bearbeitung der Werkstücke jeweils erforderliche Bearbeitungszeit gering gehalten werden. Unter den Bahnstützpunkten werden vorliegend solche Punkte der Soll-Werkzeugbahn verstanden, mittels derer die Soll-Werkzeugbahn in der NC-Steuereinrichtung codiert wird.

Die jeweilige Soll-Werkzeugbahn wird nach einer besonders bevorzugten Ausführungsform der Erfindung jeweils mittels der NC-Steuereinrichtung automatisch optimiert. Dazu können beispielsweise die bahncodierenden NC-Steuerdaten gemäß einem definierten Optimierungsalgorithmus von der Steuereinrichtung modifiziert werden. Alternativ oder zusätzlich kann die Optimierung der Soll-Werkzeugbahn auch manuell, beispielsweise über eine grafische Benutzeroberfläche der (NC) Steuereinrichtung, erfolgen.

Nach einer besonders bevorzugten Ausführungsform der Erfindung wird eine Bahnabweichung der jeweiligen Ist-Werkzeugbahn von der (zugehörigen) Soll-Werkzeugbahn bestimmt und die Soll-Werkzeugbahn bei Vorliegen einer definierten Bahnabweichung der Ist-Werkzeugbahn von der Soll-Werkzeugbahn optimiert. Dadurch können unnötige Bahnkorrekturen der Sollwerkzeugbahn bei nur geringfügigen Bahnabweichungen vermieden werden. Die definierte Bahnabweichung kann insbesondere durch ein Bahnabweichungsintervall gebildet sein, das beispielsweise auf Grundlage von vorgegebenen Fertigungstoleranzen der Werkstücke festgelegt wird.

Zur Bewertung der Werkstückgüte des (zuletzt) bearbeiteten Werkstücks wird vorzugsweise eine Bahnabweichung der abstandsgeregelten Ist-Werkzeugbahn von der Soll-Werkzeugbahn oder von einer abstandsgeregelten Ist-Werkzeugbahn eines zuvor bearbeiteten Werkstücks bestimmt. Für die jeweilige Bahnabweichung kann dabei beispielsweise ein Maximalwert vorgegeben werden, bei dessen Überschreiten das jeweilige Werkstück als Ausschussteil identifiziert wird. In dem Fall, dass ein Werkstück als Ausschussteil identifiziert und als solches ggf. auszusondern ist, wird für die Bearbeitung des jeweils weiteren Werkstücks vorzugsweise die für die Bearbeitung des jeweils zuvor bearbeiteten Werkstücks vorgegebene, d.h. die jeweils zuletzt gültige, Soll-Werkzeugbahn vorgegeben. Dadurch wird eine fehlerhafte Optimierung der Soll-Werkzeugbahn (d.h. eine Verschlechterung) wie auch eine damit verbundene unerwünschte Ausschussproduktion vermieden. Insgesamt wird dadurch eine effizientere Werkstückbearbeitung bei einem entsprechenden Kostenvorteil ermöglicht.

Nach einer bevorzugten Ausführungsform der Erfindung wird anhand der jeweils ermittelten Bahnabweichungen der Ist-Werkzeugbahnen von den jeweiligen Soll-Werkzeugbahnen ein Abweichungstrend ermittelt. Dadurch kann beispielsweise ein zunehmender Verschleiß eines in einer Prozesskette der Bearbeitung der Werkstücke vorgeschalteten Umformwerkzeugs vereinfacht erkannt und schon präventiv Maßnahmen ergriffen werden, bevor die Werkstücke eine vorgegebene (Geometrie-) Toleranz verlassen und Ausschusswerkstücke entstehen. Der Abweichungstrend wird vorzugsweise über die Zeit, insbesondere nach einer jeden Werkstückbearbeitung, aktualisiert.

Nachdem die Abstandsregelung an verschiedenen Bearbeitungsstellen des Werkstücks mit verschiedenen Amplituden und in unterschiedlichen Raumrichtungen erfolgen kann, wird der jeweilig ermittelte Bahnabweichungstrend vorzugsweise grafisch ausgegeben, d.h. beispielsweise an einem Monitor oder dergl. angezeigt. Dadurch können die Informationen seitens einer Bedienperson besonders komfortabel visualisiert und auf vereinfachte Weise überwacht werden. Eine schleichende Änderung der Geometrie der bearbeiteten Werkstücke, z.B. aufgrund von Verschleiß in einem Tiefziehwerkzeug kann dadurch frühzeitig und zuverlässig erkannt werden, bevor erste Ausschussteile auf der Maschine produziert/bearbeitet und diese erst bei einem nachfolgenden Messvorgang (Qualitätskontrolle) detektiert werden.

Die Überwachung der Werkstückbearbeitung kann dadurch nochmals weiter verbessert werden, dass eine aus steuerungsseitig hinterlegten CAD-Daten zu den zu bearbeitenden Werkstücken generierte virtuelle Werkstückabbildung und/oder zumindest ein Teil der jeweiligen Soll-Werkzeugbahn und/oder Ist-Werkzeugbahnen grafisch angezeigt werden.

Der Abstand des Werkzeugs zum Werkstück wird vorzugsweise berührungslos, insbesondere optisch und/oder kapazitiv, gemessen. Dadurch ist eine besonders verschleißarme und gegenüber Störungen weniger anfällige Abstandsmessung möglich. Im Falle einer kapazitiven Abstandsmessung können sich bekanntermaßen Messfehler durch Materialanhäufungen in Eckbereichen des Werkstücks ergeben. Durch eine Analyse der bei der Werkstückbearbeitung von dem Bearbeitungskopf tatsächlich zurückgelegten Ist-Werkzeugbahn können in Verbindung mit Krümmungsinformationen zu dem jeweiligen Eckbereich des Werkstücks Rückschlüsse über nötige Korrekturwerte / Maßnahmen zur Minimierung dieser Messfehler gezogen werden.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden.

Die Erfindung wird nachfolgend anhand eines in der Zeichnung wiedergegebenen Ausführungsbeispiels näher erläutert. Die gezeigte und beschriebene Ausführungsform ist nicht als abschließende Aufzählung zu verstehen, sondern hat vielmehr beispielhaften Charakter für die Schilderung der Erfindung. Die Figuren der Zeichnung zeigen den erfindungsgemäßen Gegenstand stark schematisiert und sind nicht maßstäblich zu verstehen.

Es zeigen:
- Fig. 1: eine erfindungsgemäße Werkstückbearbeitungsvorrichtung mit einem von einer numerischen Steuereinrichtung gesteuerten Werkzeug während der Bearbeitung eines Werkstücks, in einer Seitenansicht;
- Fig. 2: ein Blockschaltbild der numerischen Steuereinrichtung von Fig. 1; und
- Fig. 3: ein Flussdiagramm einer Ausführungsform des erfindungsgemäßen Verfahrens.

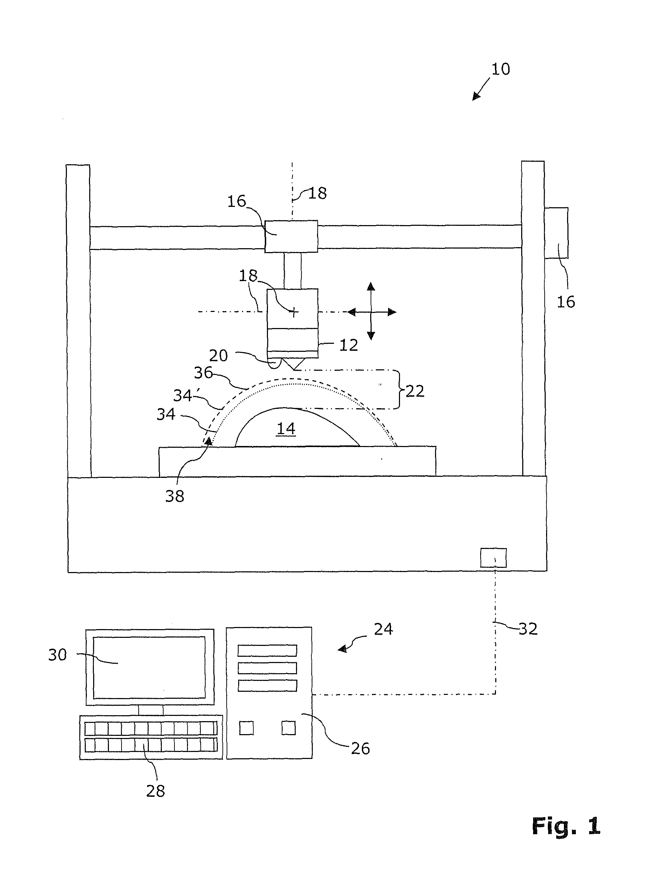

**Fig. 1** zeigt eine als Laserbearbeitungsvorrichtung ausgebildete Werkstückbearbeitungsvorrichtung **10** mit einem (Laser-)Werkzeug **12,** in einer Seitenansicht. Das Werkzeug 12 ist zum Bearbeiten eines Werkstücks **14** mittels mehrerer Stellantriebe **16** entlang/um mehrere Bewegungsachsen **18** relativ zu dem Werkstück 14 bewegbar ist. Eine an dem Werkzeug 12 angeordnete optische Abstandsmesseinrichtung **20** dient zum Messen eines jeweiligen Arbeitsabstands **22** des Werkzeugs 12 vom Werkstück 14. Die Abstandsmesseinrichtung 20 kann alternativ auch als kapazitive Abstandsmesseinrichtung ausgebildet sein.

Eine numerische Steuereinrichtung **24** umfasst einen Computer **26,** eine mit dem Computer 26 verbundene Eingabeeinheit **28** und einen Monitor **30.** Der Computer 26 ist über eine Steuerleitung **32** mit den Stellmotoren 16 und der Abstandsmesseinrichtung 20 des Werkzeugs 12 verbunden und dient einer Bewegungssteuerung des Werkzeugs 12 entlang einer von der Steuereinrichtung 24 vorgegebenen Soll-Werkzeugbahn **34** sowie einer Regelung des Arbeitsabstands 22 des Werkzeugs 12 auf einen in der Steuereinrichtung 24 gespeicherten Sollabstand.

In Fig. 1 ist die von der Steuereinrichtung 24 vorgegebene Soll-Werkzeugbahn 34, entlang derer das Werkzeug 12 bei der Bearbeitung des Werkstücks 14 verstellt wird, mit punktierter Linie dargestellt. Eine Ist-Werkzeugbahn **36,** auf der das Werkzeug 12 während der Bearbeitung des Werkstücks 14 aufgrund der Abstandsregelung bewegt wird, ist mit gestrichelter Linie wiedergegeben. Die Ist-Werkzeugbahn 36 des Werkzeugs 12 weist vorliegend eine mit dem Pfeil **38** bezeichnete Abweichung von der Soll-Werkzeugbahn auf. Die Ist-Werkzeugbahn 36 des Werkzeugs 12 fällt mit einer optimierten Soll-Werkzeugbahn **34**' zusammen, entlang derer das Werkzeug 12 bei der Bearbeitung eines nächsten baugleichen Werkstücks 14 relativ zum Werkstück 14 bewegt werden soll.

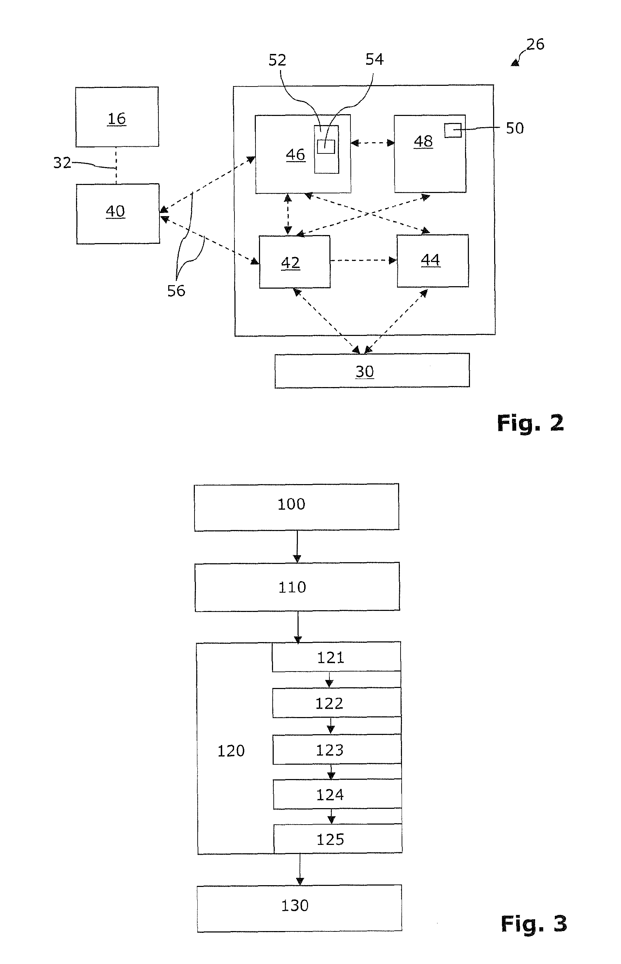

Wie aus **Fig. 2** näher hervorgeht, weist der Computer 26 einen NC-Kernel **40,** kurz NCK 40 (Systemkern), zur Echtzeitsteuerung der Bewegung des Werkzeugs 12 entlang/um dessen Bewegungsachsen 18 gegenüber dem Werkstück 14 auf (Fig. 1). Der NCK 40 ist über die Steuerleitung 32 mit den Stellantrieben 16 des Werkzeugs 12 verbunden. Der Computer 26 weist eine Bedienoberfläche (MMC) **42,** einen Graphikviewer **44,** einen Speicher **46** zur Datenspeicherung und ein Überwachungsmodul **48** mit einem darin hinterlegten Optimierungsalgorithmus **50** auf.

In dem Speicher 46 ist ein NC-Steuerprogramm **52** abgespeichert, das einen anhand CAD-Daten erstellten nativen bahnbeschreibenden NC-Datensatz **54** umfasst. Der NC-Datensatz definiert somit die vorstehend erläuterte Soll-Werkzeugbahn des Werkzeugs 12 für die Bearbeitung des Werkstücks 14. Der NC-Kernel 40 ist mit dem MMC 42 (Bedienoberfläche) und dem Speicher 46 über einen Bus **56,** z.B. einen MPI-Bus (Multi Point Interface der Simatic S7), verbunden. Der MMC 42 und der Graphikviewer sind mit dem Monitor 30 verbunden.

Das Verfahren zum zeitlich aufeinanderfolgenden Bearbeiten mehrerer Werkstücke wird nachfolgend unter zusätzlicher Bezugnahme auf **Fig. 3** erläutert.

Zum Bearbeiten eines (ersten) Werkstücks 14 wird in einem ersten Schritt 100 der im Speicher 46 des Computers 26 gespeicherte bahnbeschreibende NC-Datensatz 54 aufgerufen und über den Bus 56 an den NCK 40 übertragen.

In einem nächsten Schritt **110** wird das Werkstück 14 bearbeitet. Die NCK 40 steuert dazu über die Stellmotoren 16 eine Bewegung des Werkzeugs 12 entlang der durch den im NCK hinterlegten NC-Datensatz 54 definierten Soll-Werkzeugbahn 34 (Fig. 1). Während des Bearbeitens des Werkstücks 14 wird der Arbeitsabstand 22 des Werkzeugs 12 von dem Werkstück 14 kontinuierlich auf den im NC-Steuerprogramm 52 definierten Sollabstand eingeregelt. Zeitgleich werden die jeweiligen Achspositionen des Werkzeugs 12 entlang/um dessen Bewegungsachsen 18 mittels in der Zeichnung nicht näher wiedergegebener Sensoren erfasst. Ein typisches Abtastintervall beim Erfassen der jeweiligen Achspositionen des Werkzeugs 12 kann dabei ungefähr 12ms betragen. Die erfassten Achspositionen werden von der NCK 40 in dem Speicher 46 des Computers 26 gespeichert.

Nach Abschluss der Bearbeitung des Werkstücks 14 wird in einem nächsten Schritt **120** eine Optimierung des bahnbeschreibenden NC-Datensatzes 54 auf Grundlage der gespeicherten Achspositionen des Werkzeugs 12 vorgenommen. Das Überwachungsmodul 48 liest dazu in einem ersten Teilschritt **121** die im Speicher 46 abgespeicherten Achspositionen des Werkzeugs 12 aus und berechnet in einem zweiten Teilschritt **122** die von dem Werkzeug 12 bei der Bearbeitung des Werkstücks 14 zurückgelegte Ist-Werkzeugbahn 36.

In einem dritten Teilschritt **123** wird aus der Ist-Werkzeugbahn und der Soll-Werkzeugbahn eine Bahndifferenz, d.h. eine Bahnabweichung, ermittelt und mit einer in der Steuereinrichtung 24 hinterlegten definierten Bahnabweichung verglichen.

Bei Überschreiten der definierten Bahnabweichung wird von dem Überwachungsmodul 48 in einem weiteren Teilschritt **124** eine für die Bearbeitung des zuvor bearbeiteten Werkstücks 14 jeweils betriebsoptimale Soll-Werkzeugbahn 34 auf Grundlage des Optimierungsalgorithmus 50 berechnet.

Die in dieser Weise optimierte Soll-Werkzeugbahn 34, d.h. deren bahncodierender NC-Datensatz 54, wird in einem nächsten Teilschritt **125** in der MMC 42 abgespeichert und für die Bearbeitung eines weiteren Werkstücks 14 über den Bus 56 an den NCK 40 übertragen.

In einem nachfolgenden Schritt **130** erfolgt die Bearbeitung eines weiteren baugleichen Werkstücks 14 auf Grundlage des in der vorstehend erläuterten Weise optimierten NC-Datensatzes 54, d.h. unter Bewegen des Werkzeugs 12 entlang der optimierten Soll-Werkzeugbahn 34'.

Die Bahnabweichung 38 der jeweiligen Ist-Werkzeugbahn 36 von der zugehörigen Soll-Werkzeugbahn 34, 34' des Werkzeugs 12 wird nach jedem Durchlauf des NC-Steuerprogramms 52, d.h. nach dem Bearbeiten eines jeden Werkstücks 14, bestimmt und die Soll-Werkzeugbahn 34, 34' bei Vorliegen einer definierten Bahnabweichung 38 erneut optimiert.

Zum Visualisieren der Bahnabweichung 38 der jeweiligen Ist-Werkzeugbahn 36 von der korrespondierenden Soll-Werkzeugbahn 34, 34' wird der Graphikviewer 44 des Computers 26 gestartet. Der Graphikviewer 44 lädt die im Speicher 46 abgespeicherten Achspositionen des Werkzeugs 12 während der Bearbeitung des zuvor bearbeiteten Werkstücks 14 und stellt diese bzw. eine aus diesen generierte Ist-Bewegungsbahn 36 zusammen mit der ursprünglichen (nativen) CADgenerierten Soll-Werkzeugbahn 34 an dem Monitor 30 dar.

Am Monitor 30 kann zusätzlich ein mittels des Überwachungsmoduls 48 aus jeweiligen Bahnabweichungen 38 ermittelter Bahnabweichungstrend grafisch angezeigt werden. Der Bahnabweichungstrend kann nach dem Bearbeiten eines jeweils weiteren Werkstücks aktualisiert werden. Am Monitor 30 können zudem Korrekturen an der jeweiligen Soll-Werkzeugbahn 34, 34' mit grafischer Unterstützung vorgenommen werden.

## Patentansprüche

1. Verfahren zum Bearbeiten von baugleichen Werkstücken (14) mittels einer numerisch gesteuerten Werkstückbearbeitungsvorrichtung (10), umfassend die folgenden Schritte:
a) Bearbeiten eines Werkstücks (14) unter Vorgabe einer Soll-Werkzeugbahn (34) für ein Werkzeug (12) der Werkstückbearbeitungsvorrichtung (10),
b) Regeln eines Arbeitsabstands (22) des Werkzeugs (12) vom Werkstück (14) auf einen definierten Sollabstand, so dass das Werkzeug (12) beim Bearbeiten des Werkstücks entlang der Soll-Werkzeugbahn (34) auf einer abstandsgeregelten Ist-Werkzeugbahn (36) bewegt wird,
c) Optimieren der Soll-Werkzeugbahn (34) für ein weiteres Werkstück (14) anhand der abstandsgeregelten Ist-Werkzeugbahn (36) des bearbeiteten Werkstücks (14) und Bearbeiten des weiteren Werkstücks (14) unter Vorgabe der optimierten Soll-Werkzeugbahn (34') und/oder
d) Bewerten einer Werkstückgüte des bearbeiteten Werkstücks (14) anhand der abstandsgeregelten Ist-Werkzeugbahn (36).

2. Verfahren nach Anspruch 1, **dadurch gekennzeichnet, dass** Achspositionen des Werkzeugs (12) entlang/um dessen Bewegungsachsen (18) auf der jeweiligen Ist-Werkzeugbahn (36) erfasst und die jeweilige Ist-Werkzeugbahn (36) auf Grundlage der erfassten Achspositionen bestimmt wird.

3. Verfahren nach einem der vorhergehenden Ansprüche, **dadurch gekennzeichnet, dass** die Soll-Werkzeugbahn (34, 34') jeweils derart optimiert wird, dass diese der jeweiligen Ist-Werkzeugbahn (36) des Werkzeugs (12) bei der Bearbeitung des jeweils zuvor bearbeiteten Werkstücks (14) entspricht.

4. Verfahren nach einem der vorhergehenden Ansprüche, **dadurch gekennzeichnet, dass** die Soll-Werkzeugbahn (34, 34') jeweils derart optimiert wird, dass diese mit einer auf eine betriebsoptimierte Bewegung des Werkzeugs (12) ausgerichteten Anzahl und/oder räumlichen Abfolge von Bahnstützpunkten codierbar ist.

5. Verfahren nach einem der vorhergehenden Ansprüche, **dadurch gekennzeichnet, dass** die Soll-Werkzeugbahn (34, 34') jeweils mittels einer NC-Steuereinrichtung (24) automatisch optimiert wird.

6. Verfahren nach einem der vorhergehenden Ansprüche, **dadurch gekennzeichnet, dass** eine jeweilige Bahnabweichung (38) der abstandsgeregelten Ist-Werkzeugbahn (36) von der Soll-Werkzeugbahn (34, 34') bestimmt und die Soll-Werkzeugbahn (34; 34') bei Vorliegen einer definierten Bahnabweichung (38) optimiert wird.

7. Verfahren nach einem der vorhergehenden Ansprüche, **dadurch gekennzeichnet, dass** eine Bahnabweichung (38) der abstandsgeregelten Ist-Werkzeugbahn (36) von der Soll-Werkzeugbahn (34, 34') oder einer abstandsgeregelten Ist-Werkzeugbahn (36) eines zuvor bearbeiteten Werkstücks (14) bestimmt und zur Bewertung der Werkstückgüte des bearbeiteten Werkstücks (14) verwendet wird.

8. Verfahren nach Anspruch 6 oder 7, **dadurch gekennzeichnet, dass** aus mehreren Bahnabweichungen (38) ein Bahnabweichungstrend ermittelt wird.

9. Verfahren nach Anspruch 8, **dadurch gekennzeichnet, dass** der Bahnabweichungstrend grafisch angezeigt wird.

10. Verfahren nach einem der vorhergehenden Ansprüche, **dadurch gekennzeichnet, dass** eine aus steuerungsseitig hinterlegten CAD-Daten zu den zu bearbeitenden Werkstücken (14) generierte virtuelle Werkstückabbildung und/oder zumindest ein Teil der Soll-Werkzeugbahnen (34, 34') und/oder der Ist-Werkzeugbahnen (36) grafisch angezeigt werden.

11. Verfahren nach einem der vorhergehenden Ansprüche, **dadurch gekennzeichnet, dass** der Arbeitsabstand (22) des Werkzeugs (12) zum jeweiligen Werkstück (14) berührungslos, insbesondere optisch und/oder kapazitiv gemessen wird.

12. Werkstückbearbeitungsvorrichtung (10) mit
einem Werkzeug (12), mit
einer dem Werkzeug (12) zugeordneten Abstandsmesseinrichtung (20) zum Messen eines jeweiligen Arbeitsabstands (22) des Werkzeugs von einem Werkstück (14) und mit
einer numerischen Steuereinrichtung (24),
**dadurch gekennzeichnet,**
**dass** die Steuereinrichtung (24) zum Ausführen eines Verfahrens nach einem der vorhergehenden Ansprüche programmiert ist.

13. Werkstückbearbeitungsvorrichtung nach Anspruch 12, **dadurch gekennzeichnet, dass** die Werkstückbearbeitungsvorrichtung (10) eine Laserbearbeitungsvorrichtung und das Werkzeug (12) ein Laserwerkzeug ist.

## Claims

1. A method for processing structurally identical workpieces (14) by means of a numerically controlled workpiece processing apparatus (10), comprising the following steps:
a) processing a workpiece (14) with a desired tool path (34) being specified for a tool (12) of the workpiece processing apparatus (10),
b) regulating a working distance (22) of the tool (12) from the workpiece (14) to a defined desired distance, so that when processing the workpiece, the tool (12) is moved along the desired tool path (34) over a distance-controlled actual tool path (36),
c) optimizing the desired tool path (34) for a further workpiece (14) on the basis of the distance-controlled actual tool path (36) of the processed workpiece (14) and processing the further workpiece (14) with the optimized desired tool path (34') being specified
and/or
d) assessing a workpiece quality of the processed workpiece (14) on the basis of the distance-controlled actual tool path (36).

2. A method according to claim 1, **characterized in that** axle positions of the tool (12) along/about its motion axes (18) over the respective actual tool path (36) are detected and the respective actual tool path (36) is determined on the basis of the detected axle positions.

3. A method according to any one of the preceding claims, **characterized in that** the desired tool path (34, 34') is in each case optimized in such a manner that it corresponds to the respective actual tool path (36) of the tool (12) in the processing of the respective previously processed workpiece (14).

4. A method according to any one of the preceding claims, **characterized in that** the desired tool path (34, 34') is in each case optimized in such a manner that it can be encoded by a number and/or spatial sequence of path interpolation points that is geared to an operationally optimized motion of the tool (12).

5. A method according to any one of the preceding claims, **characterized in that** the desired tool path (34, 34') is in each case optimized automatically by means of an NC control device (24).

6. A method according to any one of the preceding claims, **characterized in that** a respective path deviation (38) of the distance-controlled actual tool path (36) from the desired tool path (34, 34') is determined and, if there is a defined path deviation (38), the desired tool path (34; 34') is optimized.

7. A method according to any one of the preceding claims, **characterized in that** a path deviation (38) of the distance-controlled actual tool path (36) from the desired tool path (34, 34') or from a distance-controlled actual tool path (36) of a previously processed workpiece (14) is determined and is used to assess the workpiece quality of the processed workpiece (14).

8. A method according to claim 6 or 7, **characterized in that** a path deviation trend is ascertained from a plurality of path deviations (38).

9. A method according to claim 8, **characterized in that** the path deviation trend is displayed graphically.

10. A method according to any one of the preceding claims, **characterized in that** a virtual workpiece image, generated from CAD data relating to the workpieces (14) to be processed and stored in the control system, and/or at least a portion of the desired tool paths (34, 34') and/or of the actual tool paths (36) is/are displayed graphically.

11. A method according to any one of the preceding claims, **characterized in that**
the working distance (22) of the tool (12) from the respective workpiece (14) is measured in a non-contacting manner, especially optically and/or capacitively.

12. A workpiece processing apparatus (10) comprising
a tool (12),
a distance measuring device (20), associated with the tool (12), for measuring a respective working distance (22) of the tool from a workpiece (14), and
a numerical control device (24),
**characterized in**
**that** the control device (24) is programmed to execute a method according to any one of the preceding claims.

13. A workpiece processing apparatus according to claim 12, **characterized in that** the workpiece processing apparatus (10) is a laser processing apparatus and the tool (12) is a laser tool.

## Revendications

1. Procédé d'usinage de pièces (14) à organisations structurelles identiques, au moyen d'un dispositif (10) d'usinage de pièces commandé numériquement, englobant les étapes suivantes :
a) usinage d'une pièce (14) avec prédétermination d'une trajectoire de consigne (34) assignée à un outil (12) dudit dispositif (10) d'usinage de pièces,
b) réglage, sur une distance de consigne bien définie, d'une distance (22) de travail de l'outil (12) par rapport à la pièce (14), de telle sorte que ledit outil (12) soit mis en mouvement le long de ladite trajectoire de consigne (34), lors de l'usinage de ladite pièce, sur une trajectoire réelle (36) dont la distance est réglée,
c) optimalisation de la trajectoire de consigne (34) de l'outil assignée à une autre pièce (14), à l'appui de la trajectoire réelle (36) dudit outil dont la distance est réglée et qui se rapporte à la pièce (14) usinée, et usinage de ladite autre pièce (14) avec prédétermination de la trajectoire de consigne optimalisée (34') dudit outil,
et/ou
d) évaluation d'une qualité de la pièce (14) usinée, à l'appui de ladite trajectoire réelle (36) de l'outil dont la distance est réglée.

2. Procédé selon la revendication 1, **caractérisé par le fait que** des emplacements axiaux occupés par l'outil (12), le long/autour des axes de mouvement (18) de ce dernier, sont détectés sur la trajectoire réelle respective (36) dudit outil, et ladite trajectoire réelle respective (36) dudit outil est déterminée sur la base desdits emplacements axiaux détectés.

3. Procédé selon l'une des revendications précédentes, **caractérisé par le fait que** la trajectoire de consigne (34, 34') de l'outil est optimalisée, à chaque fois, de façon telle qu'elle corresponde à la trajectoire réelle respective (36) dudit outil (12) au cours de l'usinage de la pièce (14) respectivement usinée à un stade précédent.

4. Procédé selon l'une des revendications précédentes, **caractérisé par le fait que** la trajectoire de consigne (34, 34') de l'outil est optimalisée, à chaque fois, de façon telle qu'elle puisse être codée avec un nombre et/ou une succession spatiale de points d'appui de ladite trajectoire, en adéquation avec un mouvement fonctionnellement optimalisé dudit outil (12).

5. Procédé selon l'une des revendications précédentes, **caractérisé par le fait que** la trajectoire de consigne (34, 34') de l'outil est optimalisée à chaque fois, en mode automatique, au moyen d'un système (24) de commande numérique.

6. Procédé selon l'une des revendications précédentes, **caractérisé par** la détermination d'un écart respectif (38) de la trajectoire réelle (36) de l'outil à distance réglée, par rapport à la trajectoire de consigne (34, 34') dudit outil, ladite trajectoire de consigne (34 ; 34') dudit outil étant optimalisée en présence d'un écart (38) bien défini entre trajectoires.

7. Procédé selon l'une des revendications précédentes, **caractérisé par** la détermination d'un écart (38) de la trajectoire réelle (36) de l'outil à distance réglée, par rapport à la trajectoire de consigne (34, 34') dudit outil ou à une trajectoire réelle (36) dudit outil dont la distance est réglée et qui se rapporte à une pièce (14) usinée à un stade précédent, ledit écart étant utilisé pour l'évaluation qualitative de la pièce (14) usinée.

8. Procédé selon la revendication 6 ou 7, **caractérisé par le fait qu'**une tendance de l'écart entre trajectoires est établie à partir de plusieurs écarts (38) entre trajectoires.

9. Procédé selon la revendication 8, **caractérisé par le fait que** la tendance de l'écart entre trajectoires est affichée graphiquement.

10. Procédé selon l'une des revendications précédentes, **caractérisé par le fait qu'**une image de pièce virtuelle, engendrée à partir de données CAO stockées côté commande et relatives aux pièces (14) à usiner, et/ou au moins une partie des trajectoires de consigne (34, 34') de l'outil et/ou des trajectoires réelles (36) dudit outil, est (sont) affichée(s) graphiquement.

11. Procédé selon l'une des revendications précédentes, **caractérisé par le fait que** la distance (22) de travail de l'outil (12), par rapport à la pièce (14) respective, est mesurée sans contact et, notamment, en mode optique et/ou capacitif.

12. Dispositif (10) d'usinage de pièces, comprenant
un outil (12),
un système (20) mesureur de distances, affecté audit outil (12) et conçu pour mesurer une distance respective (22) de travail dudit outil par rapport à une pièce (14), et
un système (24) de commande numérique,
**caractérisé par le fait**
**que** le système de commande (24) est programmé en vue de la mise en oeuvre d'un procédé conforme à l'une des revendications précédentes.

13. Dispositif d'usinage de pièces, selon la revendication 12, **caractérisé par le fait que** ledit dispositif (10) d'usinage de pièces est un dispositif d'usinage au laser, et l'outil (12) est un outil fonctionnant au laser.
